# EUROPEAN PATENT SPECIFICATION

(11) **EP 4 330 729 B1**
(45) Date of publication and mention of the grant of the patent: **02.09.2026**
(21) Application number: 21726848.1
(22) Date of filing: 30.04.2021
(51) Int. Cl.: G01T 1/20, G01T 3/06

(54) **GAMMA RADIATION DETECTOR WITH NEUTRON DETECTION CAPABILITY**
GAMMASTRAHLENDETEKTOR MIT NEUTRONENDETEKTIONSFÄHIGKEIT
DÉTECTEUR DE RAYONNEMENT GAMMA AVEC CAPACITÉ DE DÉTECTION DE NEUTRONS

(43) Date of publication of application: 06.03.2024
(73) Proprietor: Rapiscan Holdings, Inc., Wilmington, DE 19801 (US)
(72) Inventor: PAUSCH, Guntram, 01099 Dresden (DE); STEIN, Jürgen, 42349 Wuppertal (DE)
(74) Representative: Murgitroyd & Company
(86) International application number: PCT/EP2021/061467
(87) International publication number: WO 2022/228699

(56) References cited:
- WO-A1-2014/136990
- YAKUSHEV E ET AL: "Sensitive neutron detection method using delayed coincidence transitions in existing iodine-containing detectors", NUCLEAR INSTRUMENTS & METHODS IN PHYSICS RESEARCH. SECTION A, ELSEVIER BV * NORTH-HOLLAND, NL, vol. 848, 15 December 2016 (2016-12-15), pages 162 - 165, XP029905699, ISSN: 0168-9002, DOI: 10.1016/J.NIMA.2016.12.022
- BJORN J SCHOLZ: "First Observation Of Coherent Elastic Neutrino-Nucleus Scattering", ARXIV.ORG, CORNELL UNIVERSITY LIBRARY, 201 OLIN LIBRARY CORNELL UNIVERSITY ITHACA, NY 14853, 2 April 2019 (2019-04-02), XP081163650, DOI: 10.1007/978-3-319-99747-6
- CARTER J ET AL: "DETECTORS FOR GAMMA-RAY BURST ASTRONOMY", SPACE SCIENCE INSTRUMENTATION,, vol. 3, no. 2, 1 May 1977 (1977-05-01), pages 123 - 129, XP001431870

## Description

The present invention relates to the field of radiation detection, more specifically the parallel detection of neutrons and gamma rays.

Neutrons emitted from spontaneous or induced fission provide a strong signature for the presence of Special Nuclear Material (SNM). The detection of SNM is of particular interest for homeland security applications - portal monitors, handheld instruments, backpack monitors, etc. Further, the simultaneous detection of neutrons and gamma rays as such is of particular interest for the monitoring of nuclear (power) systems and particle accelerators as well as for geophysical borehole investigations.

An efficient simultaneous detection of (slow) neutrons and gamma rays by just one detector instead of two types of detectors thereby would be a major advantage for the detection of SNM - not only in the context of homeland security applications.

Neutrons are neutral particles carrying a mass and a magnetic moment. Due to their nature, the interaction of neutrons with matter (disregarding their magnetic moment) is bound to an interaction with nuclei, and therefore occurs with low probabilities for most materials.

The (kinetic) energies of free neutrons span a range of many orders of magnitude. A large fraction of neutrons emitted in spontaneous or induced fission reaction have energies of up to 10 MeV, classified into three neutron energy regimes: slow neutrons (< 1 keV), intermediate neutrons (1 keV to 0.5 MeV) and fast neutrons (0.5 MeV to 10 MeV).

The interaction of neutrons with matter - as neutron capture or neutron scattering - strongly depends on the neutron energy. Slow neutrons, in particular thermal neutrons, i.e. neutrons whose kinetic energy distribution corresponds to the Boltzmann distribution at room temperature, are more likely to be captured than fast neutrons. The neutron cross section defines the likelihood of an interaction between a neutron and a nucleus.

Most of the conventional neutron detection methods are based on the ³He(n,p)³H, the ⁶Li(n,α)³H, or the ¹⁰B(n,α)⁷Li reactions. These reactions emit ionizing particles, which are easy to detect and well distinguishable from gamma rays. Further, ³He, ⁶Li and ¹⁰B are distinguished by a large capture cross section for thermal neutrons.

The emitted charged particles generate short but dense ionization tracks with ranges of a few micrometers in solids, and up to some millimeters in gases of appropriate pressure. Consequently, the neutron-capturing component must be either a constituent of the detection medium (as, e.g., in ³He and BF₃ tubes, scintillators comprising ⁶Li), or it must be provided as a thin layer in close contact with the detector medium (as, e.g., in ¹⁰B-coated proportional counters). The neutron-capturing component should consist of isotope-separated nuclides to avoid competing neutron-capture reactions reducing the detection efficiency. Therefore, corresponding detectors are often expensive. In addition, ³He has become very expensive recently due to a serious shortage.

Previously, scintillator crystals comprising natural Li or isotopically enriched or separated ⁶Li for a parallel detection of neutrons and gamma rays have been developed, amongst them CLYC (Glodo et al., IEEE Trans. Nucl. Sci. 55 (2008) 1206), CLLB (Shirwadkar et al., Nucl. Instr. Meth. In Phys. Res. A 652 (2011) 268), or NAIL (Yang et al., IEEE TNS 64 (2017) 2406). These advanced scintillator materials allow to distinguish neutron and gamma-ray interactions by analyzing the pulse shape of the detector signals. Neutron interactions produce tritons and alpha particles, while gamma-ray interactions produce photoelectrons, Compton electrons, or electron-positron pairs. Hence, scintillation detectors providing a reasonable efficiency for neutron detection as well as good spectroscopic performance for gamma ray detectors may be constructed using such scintillator crystals. However, these scintillator crystals are more complex and therefore expensive, rendering the price of corresponding detectors to numbers exceeding the price of common NaI(Tl) detectors of equal size by a factor of at least 2 to 5. As a result, such detectors may even become more expensive than a combination of a common NaI(Tl) gamma detector and a separate neutron detector (e.g., a ³He tube).

An alternative and cheaper solution for neutron detection in applications that are utilizing gamma ray detectors anyway is based on neutron capture reactions with subsequent emission of gamma rays, so-called Neutron Capture Detectors (NCD). An NCD detects neutrons by measuring the gamma radiation following neutron captures in a neutron-gamma converter arranged around or comprised in the gamma-ray detector, as disclosed in EP 24 600 32 A1 and WO 2011/012155 A1. Naturally, a major challenge of any NCD is to discriminate between the signal of gamma rays stemming from neutron capture and signal of ubiquitous gamma rays of external sources.

Document WO2014/136990 aims to distinguish between neutrons and background gamma radiation and discloses a NaI or CsI scintillator detector to determine the fluence rate and I-128 activity based on a double fitting approach existing in the energy analysis of the beta spectrum obtained after the neutron-activation of the iodine (I-127) and resulting beta ray emission, as well as in a time analysis based on the I-128 half-life.

In neutron capture reactions a neutron is trapped by a nucleus ^{A}X resulting in a daughter nucleus ^{A+1}X with an excitation corresponding to the neutron separation energy Sₙ(^{A+1}X) of the daughter nucleus. Subsequently, this energy is released in form of a gamma-ray cascade. The cascade may involve continuum states and distinct gamma transitions. The discrete lines represent fingerprints of the capturing nuclide or a mixture of nuclides, e.g. of chemical elements in their natural isotope composition. The gamma rays emitted upon thermal neutron capture, in particular the so-called "prompt gamma rays from slow neutron capture" are used for elemental analysis by neutron activation, e.g. in homeland security applications and borehole investigations. The energies and intensities of prompt gamma rays from neutron capture are continually being characterized and tabulated, e.g. in the "Database of prompt gamma rays from slow neutron capture for elemental analysis", IAEA (2007).

The detection of gamma rays generally is based on the measurement of electric currents. The electrons and positrons produced in gamma-ray interactions with the detector medium either directly produce electron-hole pairs in semiconductor materials or are converted into electric current by means of a scintillator material and a photodetector with internal or external amplification.

EP 17 170 025.5 relates to a method to detect both gamma rays and fast neutrons using a scintillator crystal providing different light pulse shapes for recoil electrons and recoil nuclei, such as Tl-doped NaI, for homeland security applications. This method is restricted, however, to the detection of fast neutrons.

EP 24 600 32 A1 relates to an NCD comprising a gamma ray detector supplemented with neutron-gamma converters for an as much as possible calorimetric detection of the gamma-ray cascades following neutron capture reactions. The limitation of this approach is due to the sensitivity of an NCD for ambient gamma radiation.

WO 2011/012155 A1 relates to an NCD consisting of one or more gamma ray detectors comprising a neutron-gamma converting isotope of a chemical element used as constituent or dopant of the active detector material for an as much as possible calorimetric detection of the gamma-ray cascades following neutron capture reactions. The limitation of this approach is due to the sensitivity of an NCD for ambient gamma radiation.

So far, the only way to distinguish between neutron capture gamma rays and gamma rays of other sources in an NCD is the rejection of detector signal corresponding to energy depositions below approximately 3 MeV, the NCD threshold, for being considered as neutron signals, since common radioactive nuclides do not emit noticeable fractions of gamma rays with energies above 2615 keV.

The major drawback of signal rejection below the NCD threshold is that neutron-capture gamma-ray cascades leading to energy dispositions in the gamma-ray detector below the NCD threshold are also rejected. Such cases would not occur if the NCD warranted a truly calorimetric detection of neutron-capture gamma-ray cascades. In practice the calorimetric regime could only be approached by an appropriate construction and by using a reasonably large and dense gamma-ray detector. Hence, the NCD threshold reduces the probability of detecting neutrons, i.e. the sensitivity of the detector. The sensitivity loss scales with the deviation from a truly calorimetric regime. Therefore, large sizes and corresponding high weights of NCD are required to counteract on the delimiting conditions of an NCD imposed by the NCD threshold.

Yakushev et al proposed in Nucl.Inst.Meth. A 848 (2017) 162 a method for thermal neutron detection in scintillators comprising iodine, as common Tl-doped NaI scintillators. Natural iodine only consists of the stable ¹²⁷I isotope which provides a relatively large thermal neutron capture cross section of about 6.2 barn. This cross section is large enough to absorb a considerable fraction of thermal neutrons interacting with a Tl-doped NaI scintillator of usual dimensions (2-3" diameter, 2-3" height). The de-excitation cascade following neutron capture on ¹²⁷I often involves the 137.8 keV state in ¹²⁸I having a half-life (T_{1/2}) of 845 ns. The de-excitation cascade of the 137.8 keV state in ¹²⁸I involves low-energy gamma rays and converted transitions of which a large fraction is detected in the NaI detector itself - with a certain delay following the prompt part of the de-excitation cascade which may also be at least partially absorbed and then generate a signal in the NaI detector. Consequently, the resulting electric current signal of a gamma-ray cascade upon thermal neutron capture sometimes exhibits a double pulse within a time window of a few microseconds, wherein the delayed pulse fits to an energy deposition of approximately 138 keV. Hence, neutrons are detected if the distribution of time differences of double pulses exhibits the 845 ns decay component, whereby the strength of the 845 ns decay component reflects the thermal neutron flux the NCD is exposed to.

Using the technique of Yakushev et al, thermal neutrons can be discriminated from a gamma radiation background stemming from other (external) sources as long as the background is low enough to not significantly contaminate the double-pulse time-difference distribution by random pulse pile-ups. According to Yakushev et al, however, the analysis of the double pulses resulting from delayed gamma rays upon neutron capture is only possible because the time constant of the delayed gamma emission, 845 ns, is large in comparison to the light decay time of the Tl-doped NaI scintillator used in the demonstration which is approximately 250 ns.

While Yakushev et al's method is based on common NaI(Tl) scintillators, which are relatively cheap and widely used for gamma-ray spectroscopy in numerous applications, a number of disadvantages results from said method:
- Said method is based on searching for double pulses in a sequence of well separated signals, i.e. detecting and discriminating pulse by pulse in the event data stream. Consequently, the dead time of the digitizer (trigger holdoff) was set to 1.8 µs such that delayed pulses having less than 1.8 µs delay to the prompt signal were not detectable. This trigger hold off ensures that the delayed signal component does not pile up with the prompt signal component. In case of a half-life of 845 ns, the law of radioactive decays yields a fraction of only 23% of all delayed emissions that are emitted later than 1.8 µs after the prompt part of the cascade. This means that more than ¾ of the delayed gamma emissions are not detectable with a holdoff time as stated by Yakushev et al.
- Said method requires the delayed pulses to not pile-up with the prompt signal in order to measure their energy deposited in the scintillator crystal and the time delay of distinct signals following each other.
- Though said method generally allows measuring neutrons in a background of ambient gamma radiation, the background suppression is not good enough for detecting a small neutron flux in strong gamma radiation fields, which is a standard task in homeland-security applications.

Sakharov et al. (Nucl. Phys. A528 (1991) 317) investigated the level scheme of ¹²⁸I. They state that the long-lived 137.85 keV state in ¹²⁸I is often fed by another long-lived state, the 167.3 keV state having a half-life of 175 ns. The corresponding 29.5 keV transition is almost completely converted. According to their research, the 167.3 keV state is mainly fed by a 2-step transition, comprising a 142 keV gamma transition from a 376 keV state to a 234 keV state, slightly converted, followed by a strongly converted 67 keV transition to the 167.3 keV state. They found that this cascade of gamma rays and conversion electrons is often involved in the decay chain following neutron capture in ¹²⁷I.

Further, pulse pile-up is a well-known and persisting problem in the field of radiation detection. Nuclear reactions and accompanying de-excitation cascades occur randomly. On the one hand, the time difference between consecutive pulses recorded in gamma ray detectors follows the probability density function of an exponential distribution. Hence, small time differences between consecutive pulses are more likely than large time differences. On the other hand, the pulse duration is controlled by the decay time of the scintillator which defines the time scale for resolving distinct signals. In case the time difference between consecutive pulses becomes shorter than the pulse duration, the signals pile up. The energy determination of a corresponding event, meaning an integration of the signal over time to measure the charge content, fails in case of a pulse pile-up, i.e. it cannot provide correct results for the two piled-up signals.

Pulse pile-ups can be detected, e.g. by comparing the ratio of two shifted integrals over each signal pulse. While single pulses will always return the same ratio of the shifted integrals, the ratio of shifted integrals of pulse pile-ups deviates.

Based on the identification of pile-up events, the signals of piled-up pulses often are rejected. The major disadvantage of pulse pile-up rejection, however, is the loss of potentially valuable signal.

In a publication by Scoullar et al, AIP Conf. Proc. 1412 (2011) 270, a method for real-time decoding of pulse pile-up events for a range of detectors, including scintillation based radiation detectors, is suggested. This method is model-based and characterizes the number, time-of-arrival and energy of all events in the detector output. In doing so, composite events are decoded and energy and time-of arrival of multi-pulse pile-ups are reconstructed, with a pulse pair resolution of down to 50 ns. An important constraint of this approach is the fixation of the pulse shape expected from the detector.

Pulse pile-up decoding or reconstruction techniques have so far been of particular advantage in high-flux pulsed beam experiments with low duty cycle and relatively slow detectors, such as Free Electron Lasers for which pulse pile-ups are unavoidable and signal collection is expensive. In usual spectroscopic measurements higher count rates lead to a more severe disturbance of the spectrum due to pulse pile-up. Sufficiently high input rates, however, usually allow the partial loss of signals, rendering the pulse pile-up rejection the method of choice.

Hence, the object of the present invention is to provide a system and a corresponding method allowing the detection of slow neutrons with common iodine-comprising scintillation detectors in a way that minimizes the above mentioned drawbacks at least partially thereby improving the sensitivity of common iodine-comprising scintillation detectors for neutron detection and the feasibility of their large-scale deployment for that purpose.

This problem is solved by a radiation detection system and a method for detecting neutrons using delayed triple-coincidence capture gamma-ray detection according to the independent claims. Preferred embodiments are described in the respective dependent claims.

More specifically, the invention provides a radiation detection system for a parallel detection of gamma rays and neutrons, comprising a gamma-ray detector, a digitizer and an analyzer, according to claim 1.

The gamma-ray detector comprises a scintillator crystal comprising ¹²⁷I and a photodetector with an amplifier, wherein said scintillator crystal is adapted to convert energy deposited by gamma rays or conversion electrons to optical photons. The photodetector is adapted to convert the optical photons to an electrical signal. The amplifier is adapted to amplify the electrical signal, wherein the electrical signal is in a known relationship with the energy deposited by the detected gamma rays or conversion electrons in said scintillator crystal. The digitizer comprises sampling Analog to Digital Converters, ADC, wherein said digitizer is adapted to sample the electrical signal of said gamma-ray detector with a predetermined frequency of at least 20 mega samples per second to generate digitized time series of the electrical signal. The analyzer is coupled operatively to said digitizer. Said digitizer is adapted to transmit the digitized time series to the analyzer, and the analyzer is adapted to analyze the digitized time series in order to identify signal components in the digitized time series with consecutive time delays between each other of at least 20 nanoseconds and at most 10 microseconds, wherein each signal component is due to an energy deposited in the scintillator crystal.

The analyzer is further adapted to identify a primary signal component in the digitized time series corresponding to an energy deposition *E*₀ in a predefined range. The analyzer is adapted to search for a first delayed signal component in the digitized time series, the first delayed signal component corresponding to an energy deposition *E*₁ of about 30 keV, preferably between 15 keV and 50 keV, and following the primary signal component in time, and to search for a second delayed signal component in the digitized time series, the second delayed signal component corresponding to an energy deposition *E*₂ of about 138 keV, preferably between 100 keV and 200 keV, and following the first delayed signal component in time. Moreover, the analyzer is adapted to count the number of digitized time series comprising at least the first delayed signal component and the second delayed signal component as neutron events, thereby providing a measure for a neutron flux the scintillator crystal is exposed to.

The system according to the invention has the advantage that no trigger holdoff is required that prevents detecting delayed signal components with a time difference of less than 1.8 µs to the primary signal component. Thus, also the signal component resulting from de-excitation of the long-lived excited state at about 167 keV having a half-life of just about 175 ns can be exploited to sharpen the search criteria for gamma rays upon neutron captures in the scintillator crystal. As a result, the radiation detection system according to the invention manifests itself with a much stronger background suppression compared to other methods of neutron detection via neutron-capture gamma rays which renders the radiation detection system applicable in much stronger gamma radiation fields.

Preferably, the digitizer is even adapted to sample the electrical signal of said gamma-ray detector with a predetermined frequency of at least 100 mega samples per second.

Preferably, the analyzer is further adapted to quantify at least one event parameter of a group of event parameters for each of said digitized time series, the group of event parameters comprising:
- the time difference between said primary signal component and said first delayed signal component,
- the time difference between said primary signal component and said second delayed signal component,
- the time difference between said first delayed signal component and said second delayed signal component,
- the energy deposition in the scintillator crystal corresponding to the primary signal component,
- the energy deposition in the scintillator crystal corresponding to the first delayed signal component,
- and the energy deposition in the scintillator crystal corresponding to the second delayed signal component, and
- combinations thereof.

Moreover, the analyzer is adapted to evaluate for each of said digitized time series whether at least one event parameter of the group of event parameters fulfills a predefined criteria to classify said digitized time series as neutron event, and to count the number of digitized time series classified as neutron event, thereby providing a measure for the neutron flux the scintillator crystal is exposed to.

The preferred embodiment of the system according to the invention has the further advantage that even single neutron counts, in particular thermal neutron counts may be registered even in environments with an intense ambient gamma radiation. The relatively precise quantification of at least one event parameter is sufficient to suppress the background due to random triple pulse events such that individual digitized time series representing delayed triple coincidences can be attributed to neutron event, i.e. neutron captures in ¹²⁷I of the scintillator crystal.

Preferably, the photodetector of the gamma-ray detector is a photomultiplier tube, a silicon photomultiplier (SiPM), or an avalanche photodiode.

Further preferably, the photomultiplier tube comprises a super-bialkali photokathode or an ultra-bialkali photokathode.

Preferably, said scintillator crystal is a NaI crystal, preferably with Tl doping, or a CsI crystal, preferably with Na or Tl doping, or a NaI crystal, preferably with Tl doping, comprising Li or B as co-dopant.

The radiation detection system according to the invention therefore has the advantage that it can be equipped with common iodine-comprising crystals which are relatively cheap and already widely applied in gamma-ray spectroscopy.

Preferably, the gamma-ray detector, the digitizer and the analyzer of the radiation detection system are small enough to be arranged in a handheld device.

Preferably, the gamma-ray detector, the digitizer and the analyzer of the radiation detection system are small enough to be arranged in a backpack.

The radiation detection system according to the invention therefore is particularly well adapted to an application in the field of homeland security.

Further, the invention provides a method to detect neutrons and gamma rays, according to claim 8. The method comprises a number of steps according to which neutrons interact with ¹²⁷I of the scintillator crystal generating ¹²⁸I upon neutron capture, wherein ¹²⁸I de-excites both under a prompt emission of gamma radiation and at least partially via at least one long-lived excited state feeding another long-lived excited state which at least sometimes leads to two delayed energy depositions in the scintillator crystal corresponding to the two delayed de-excitation steps producing either conversion electrons or gamma radiation interacting with the scintillator crystal, following a primary signal component which is due to the prompt emission. The gamma-ray detector generates an electrical signal in succession of an interaction between gamma rays or conversion electrons and said scintillator crystal, wherein said electrical signal is in a known relationship with the energy deposited by the detected gamma rays or conversion electrons in said scintillator crystal. The digitizer samples the electrical signal of said gamma-ray detector with a predetermined frequency of at least 20 mega samples per second, preferably at least 100 mega samples per second, to generate a digitized time series of the detected gamma rays, and transmits the digitized time series to the analyzer. The analyzer identifies a primary signal component in the digitized time series corresponding to an energy deposition *E*₀ in a predefined range, searches for a first delayed signal component in a digitized time series, the first delayed signal component corresponding to an energy deposition of about 30 keV, preferably between 15 keV and 50 keV, and following the primary signal in time, searches for a second delayed signal component, the second delayed signal component corresponding to an energy deposition of about 138 keV, preferably between 100 keV and 200 keV, and following the first delayed signal component in time. Moreover, the analyzer counts the number of digitized time series comprising at least the first delayed signal component and the second delayed signal component as neutron events, thereby providing a measure for the neutron flux the scintillator crystal is exposed to.

Preferably, the method further comprises the steps according to which the analyzer quantifies at least one event parameter of a group of event parameters for each of said digitized time series, the group of event parameters comprising:
- the time difference between said primary signal component and said first delayed signal component
- the time difference between said primary component and said second delayed signal component
- the time difference between said first delayed signal component and said second delayed signal component,
- the energy deposition in the scintillator crystal corresponding to the primary signal component,
- the energy deposition in the scintillator crystal corresponding to the first delayed signal component,
- the energy deposition in the scintillator crystal corresponding to the second delayed signal components, and
- combinations thereof.

In a further step, the analyzer evaluates for each of said digitized time series whether at least one event parameter of the group of event parameters fulfills a predefined criteria to classify said digitized time series as neutron event, and eventually counts the number of digitized time series classified as neutron event, thereby providing a measure for the neutron flux the scintillator crystal is exposed to.

The method according to the invention provides the advantage that it facilitates simultaneous gamma-ray spectroscopy and neutron detection with common, off-the-shelf scintillation detectors using iodine-comprising scintillators, e.g., NaI (Tl), CsI (Na) or CsI (Tl). Therefore, the method according to the invention enables neutron detection capabilities in common digital gamma-ray spectrometers with iodine-comprising scintillation detectors without requiring additional hardware.

By searching for a first delayed signal component and a second delayed signal component in the digitized time series immediately after the primary signal, i.e., without a trigger holdoff as long as 1.8 µs of the digitizer, the neutron capture events can be detected much more efficiently due to a much stronger background suppression compared to other methods of neutron detection using iodine-comprising scintillator crystals, e.g., Yakushev's method. It were the inventors who first realized that the de-excitation of the long-lived excited state at 167 keV in ¹²⁸I to the long-lived excited state at 138 keV in ¹²⁸I provides an effective handle to discriminate the gamma ray de-excitation cascade following a neutron-capture event from random pulse pile-ups in a strong gamma-ray radiation environment. **In** particular, depending on the radiation background it may often not be sufficient to rely on the double-pulse structure/delayed double coincidences as seen by Yakushev et al, according to which the delayed pulses correspond to an energy deposition of about 138 keV, since random pulses with energies which are equal within the resolution of the scintillator crystal may occur. **In** contrast, random pulses fulfilling the search criteria of the method according to the invention are much less likely, rendering said method to be much more robust in strong gamma ray radiation backgrounds which are typical for homeland security applications.

Preferably, the analyzer finds and identifies at least one delayed signal component in said digitized time series by means of pulse pile-up reconstruction techniques, utilizing a method to decompose the digitized time series comprising piled-up signal components into these components, thereby quantifying at least one of the group of event parameters.

The use of pulse pile-up reconstruction techniques has the advantage over the sequential pulse by pulse detection proposed by Yakushev that also signal components at a time delay of less than 1.8 µs from the primary signal component may be distinguished and detected. This increases the neutron detection efficiency with respect to prior art by a factor of 2 to 4 and also improves the effect-to-background ratio even when only searching for double pulses, i.e. using delayed double-coincidence events. The gain basically depends on the minimum time distance between primary and delayed signal component that is required by the pile-up reconstruction algorithm for an unambiguous signal decoding.

Most preferably, the analyzer further identifies another primary signal component in the digitized time series corresponding to an energy deposition in a predefined range, searches for a delayed signal component in the digitized time series, the delayed signal component corresponding to an energy deposition of around 138 keV, preferably between 100 keV and 200 keV, and following said primary signal component in time, quantifies at least one event parameter of the group of event parameters for each of said digitized time series, the group of event parameters further comprising:
- the time difference between said primary component and said delayed signal component,
- the energy deposition in the scintillator crystal correspond-ing to said primary signal component, and
- the energy deposition in the scintillator crystal correspond-ing to said delayed signal components,
evaluates for each of said digitized time series whether at least one event parameter of the group of event parameters fulfills a predefined criteria to classify said digitized time series as thermal neutron event, and counts the number of digitized time series classified as neutron event, thereby providing a measure for the neutron flux the scintillator crystal is exposed to.

The combination of searching for delayed triple coincidences and delayed double coincidences using pulse pile-up reconstruction techniques eventually yields even better effect-to-background ratios allowing the parallel detection of neutrons and gamma rays even in environments with an intense ambient gamma radiation.

In an aspect of the invention, the method according to the invention is applied in a radiation detection system which is small enough to be arranged in a backpack.

In a further aspect of the invention, the method according to the invention is applied in a radiation detection system which is small enough to be arranged in a handheld device.

Some embodiments of the invention are explained in the following with reference to the figures. The described examples are provided for illustrative purposes and are not intended to limit the scope of the invention which is defined by the appended claims.

Shown is in
- Fig. 1: a schematic set-up of an embodiment of the radiation detection system for a parallel detection of gamma rays and neutrons as provided by the present invention;
- Fig. 2: exemplary digitized time series comprising delayed triple coincidences indicating neutron captures in ¹²⁷I;
- Fig. 3: distributions of time differences t32 between the second delayed signal component and the first delayed signal component of delayed triple coincidences, measured at different detector loads;
- Fig. 4: distributions of time differences t21 between a delayed signal component and the primary signal component of delayed double coincidences, measured at different detector loads and analyzed using pulse pile-up reconstruction, the analysis excluding all detected delayed triple-coincidence events;
- Fig. 5: distributions of time differences t21 between a delayed signal component corresponding to an energy deposition of 138 keV and the primary signal component of delayed double coincidences, measured at different detector loads with a trigger holdoff of 1.8 µs, thereby corresponding to prior art. This analysis also includes delayed triple coincidences, however, without being detected as such, as the first delayed signal component is hidden due to the trigger holdoff.

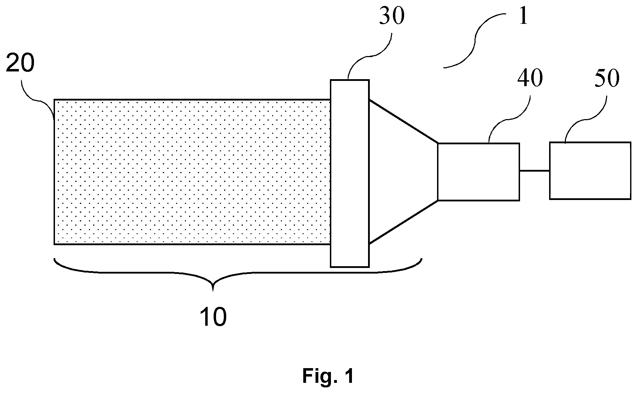

**Figure 1** shows a first embodiment of the radiation detection system for a parallel detection of gamma rays and neutrons provided by the present invention.

Shown is a radiation detection system 1 comprising a gamma-ray detector 10, a digitizer 40 and an analyzer 50. The gamma-ray detector 10 comprises a scintillator crystal 20 comprising ¹²⁷I and a photodetector 30 with an amplifier, wherein said scintillator crystal 20 is adapted to convert energy deposited by gamma rays or conversion electrons to optical photons. The photodetector 30 is adapted to convert the optical photons to an electrical signal and the amplifier is adapted to amplify the electrical signal, wherein the electrical signal is in a known relationship with the energy deposited by the detected gamma rays or conversion electrons in said scintillator crystal 20.

Preferably, the photodetector 30 is a photomultiplier tube with intrinsic signal amplification. The photomultiplier may as well be an avalanche photodiode or a silicon photomultiplier (SiPM).

Most preferably, the photomultiplier tube comprises a super-bialkali photokathode or an ultra-bialkali photokathode.

The scintillator crystal 20 comprises ¹²⁷I intrinsically, acting as neutron-gamma converter. A neutron-gamma converter is adapted to emit gamma radiation upon capturing neutrons.

More specifically, said scintillator crystal 20 is a NaI crystal, preferably with Tl doping, or a CsI crystal, preferably with Na or Tl doping, or a NaI crystal, preferably with Tl doping, comprising Li or B as co-dopant.

Needless to say, scintillator crystal 20 and the photodetector 30 may be wrapped in light reflecting materials and arranged in a housing to protect them from external light and humidity (not shown).

The embodiment of the radiation detection system of Fig. 1 further comprises a digitizer 40 comprising sampling Analog to Digital Converters, ADC. The digitizer 40 is adapted to sample the electrical signal of said gamma-ray detector with a predetermined frequency of at least 20 mega samples per second, preferably at least 100 mega samples per second, to generate digitized time series of the electrical signal.

The embodiment of the radiation detection system of Fig. 1 also comprises an analyzer 50 which is coupled operatively to said digitizer 40. The digitizer 40 is adapted to transmit the digitized time series to the analyzer 50, and the analyzer 50 is adapted to analyze the digitized time series in order to determine a measure of the neutron flux, particularly the slow neutron flux, the detector 10 is exposed to. For this purpose, the analyzer 50 is adapted to identify signal components in the digitized time series with consecutive time delays between each other of at least 20 ns and at most 10 µs, wherein each signal component is due to an energy deposition in the scintillator crystal 20.

Preferably, the analyzer 50 is adapted to analyze the digitized time series and to determine a measure for the neutron flux, particularly the slow neutron flux, the detector 10 is exposed to in real-time.

The analyzer 50 is further adapted to identify a primary signal component in the digitized time series corresponding to an energy deposition *E*₀ in a predefined range. The analyzer 50 is adapted to search for a first delayed signal component in the digitized time series, the first delayed signal component corresponding to an energy deposition *E*₁ of about 30 keV and following the primary signal component in time, and to search for a second delayed signal component in the digitized time series, the second delayed signal component corresponding to an energy deposition *E*₂ of about 138 keV and following the first delayed signal component in time. The analyzer 50 is further adapted to count the number of digitized time series comprising at least the first delayed signal component and the second delayed signal component as neutron events, thereby providing a measure for the neutron flux the scintillator crystal is exposed to.

In practice, it may be sufficient to determine the energy depositions of the delayed signal components coarsely within time and energy windows, the energy windows e.g. ranging from 15 keV to 50 keV for the first delayed signal component and from 100 keV to 200 keV for the second delayed signal component. For single neutron counts, in particular in environments with very intense ambient gamma radiation (count rates far beyond 1000 counts per second), it has been proven useful to further suppress the background of random triple pulse events by quantifying at least one event parameter of a group of event parameters more precisely.

Preferably, the group of event parameters comprises the time difference between the primary signal component and the first delayed signal component, the time difference between the primary signal component and the second delayed signal component, the time difference between the first delayed signal component and the second delayed signal component, and the corresponding energy depositions of each signal component in the scintillator crystal 20, and combinations thereof.

The inventors were the first who realized that digitized time series representing triple coincidence events, wherein each pulse of the triple coincidence events fulfills relatively coarse grained time and energy windows, may be attributed with high accuracy to neutron events if at least one of the event parameters fulfills a predefined fine-grained criteria. Examples for such a predefined criteria are a time difference between the first delayed signal component and the second delayed signal component of less than 4 µs, an energy deposition corresponding to the primary signal component of less than 300 keV, or the energy depositions corresponding to the first delayed signal component and second delayed signal component of 30 keV and 138 keV, respectively, within the resolution of the scintillator crystal 20.

More specifically, the analyzer 50 is preferably adapted to carry out pulse pile-up reconstruction techniques, wherein the pulse pile-up reconstruction techniques comprise a method to decompose the digitized time series into their signal components. Each signal component may have a pulse shape comprising an onset, the onset being characterized by a sharp rise in finite time, and an exponential decay, the exponential decay being essentially characterized by the light decay time of the scintillator crystal 20. Based on the reconstructed signal components, the analyzer 50 may quantify at least one of the group of event parameters. Time differences may be computed between the onsets of two consecutive signal components and energy depositions in the scintillator crystal 20 of a corresponding signal component may be determined by integrating the corresponding signal component.

The analyzer 50 may preferably carry out the pulse pile-up reconstruction techniques and subsequent computation of event parameters in real-time to enable an online detection of neutron events, e.g. for homeland security applications with moving sources.

Preferably, the gamma-ray detector 10 and corresponding electronics 40 and 50 are small enough to be arranged in a handheld device. Equally preferably, the gamma-ray detector 10 and corresponding electronics 40 and 50 are small enough to be arranged in a backpack. These form factors of the radiation detection system according to the invention have been proven particularly useful for homeland security applications.

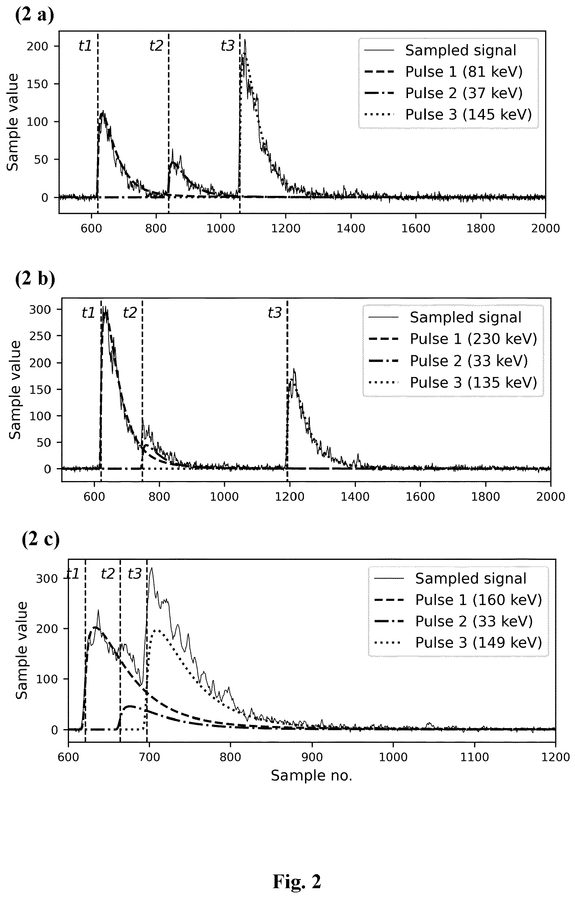

**Figure 2** shows exemplary digitized time series comprising delayed triple coincidences indicating neutron capture in ¹²⁷I followed by gamma-ray cascades involving the two long-lived excited states in ¹²⁸I, at about 167 keV (half-life of 175 ns) and at about 138 keV (half-life at 845 ns), respectively..

The digitized time series shown in Fig. 2 were measured as directly digitized anode currents in an embodiment of the radiation detection system comprising a 2"x2" NaI (Tl) crystal 20 coupled to a photomultiplier tube (PMT), the PMT coupled with a digital spectrometer 40 operated at a sampling rate of 250 MHz. The gamma-ray detector 10 was exposed to a moderated ²⁵²Cf neutron source. The digitized time series representing the signal components were stored and analyzed offline for delayed double and triple coincidences.

Digitized time series representing delayed triple coincidences comprise three signal components, namely a primary signal component recorded at a time t1, a first delayed signal component recorded at a time t2, and a second delayed signal component recorded at a time t3. InFig. 2these signal components are denoted as Pulse 1, Pulse 2, and Pulse 3, respectively. Triple coincidences as determined by the method according to the present invention are characterized by a first delayed signal component, Pulse 2, corresponding to an energy deposition of around 30 keV in the scintillator crystal 20 and a second delayed signal component, Pulse 3, correspond-ing to an energy deposition of around 138 keV in the scintillator crystal 20. Note that the sub-pulse energies expressed in Fig. 2 are slightly overestimated, since the linear energy calibration used for this stage of the signal analysis does not consider the non-linearity of the NaI(Tl) light output.

Digitized time series representing delayed double coincidences comprise only two signal components, namely a primary signal component recorded at a time t1 and a delayed signal component recorded at a time t2. Delayed double coincidences as mentioned by Yakushev et al. are characterized by a delayed signal component corresponding to an energy deposition of around 138 keV in the scintillator crystal 20.

Fig. 2shows only representations of delayed triple coincidence events which were analyzed using pulse pile-up reconstruction techniques. In case of a measurement involving a trigger holdoff, these delayed triple coincidence events are mostly mistaken as a delayed double coincidences since in most cases the first delayed signal component cannot be separated from the primary signal component because of the trigger holdoff such that a delayed trip coincidence event actually appears as a double pulse structure comprising a primary signal component and a delayed signal component corresponding to an energy deposition of about 138 keV. Real delayed double-coincidence events, however, only comprise one delayed signal component corresponding to an energy deposition of about 138 keV since the de-excitation cascades do not involve the excited state at around 167 keV (half-life of 175 ns) of ¹²⁸I in these cases. Without using pulse pile-up reconstruction techniques, real delayed double-coincidences cannot be distinguished from delayed triple coincidences since the latter are also detected as double pulses, e.g. due to a trigger holdoff.

The three panels of Fig. 2highlight three different scenarios of delayed triple coincidences found by the method according to the present invention. The upper panel, Fig. 2a, shows well isolated signal components of a delayed triple coincidence which were rather rare in the recorded dataset. In particular, the first delayed signal component, Pulse 2, corresponding to an energy deposition of around 30 keV in the scintillator crystal 20, mostly piles up with the primary signal component, Pulse 1, as shown in the middle (Fig. 2b) and the lower panels (Fig. 2c) of Fig. 2. Even the second delayed signal component, Pulse 3, corresponding to an energy deposition of around 138 keV in the scintillator crystal 20, often piles up with the prompt signal component or with the first delayed signal component, as shown in Fig. 2c. Hence, pulse pile-up reconstruction techniques are essential to decompose the digitized time series in order to identify the relevant signal components of delayed triple coincidences indicating neutron captures in ¹²⁷I.

Based on the sampling rate of the digital spectrometer 40 used for this demonstration, 1.8 µs correspond to 450 samples in the example of Fig. 2. The exemplary digitized time series ofFig. 2 therefore clearly demonstrate, that Yakushev et al., being limited by a trigger holdoff of the spectrometer of 1.8 µs, would have not only missed the first delayed signal component, Pulse 2, corresponding to an energy of around 30 keV in the scintillator crystal 20, but even also the second delayed signal component, Pulse 3, corresponding to an energy deposition of around 138 keV in the scintillator crystal 20 in all of the shown exemplary digitized time series.

The examples of delayed triple coincidences shown in Fig. 2result from the method provided by the present invention to detect neutrons and gamma rays, utilizing the radiation detection system according to the invention.

In a first step of the method, neutrons interact with ¹²⁷I of the scintillator crystal generating ¹²⁸I upon neutron capture. ¹²⁸I de-excites both under a prompt emission of gamma radiation and at least partially via at least one long-lived excited state feeding another long-lived excited state, which at least sometimes leads to two delayed energy depositions in the scintillator crystal 20 corresponding to the two delayed de-excitation steps producing either conversion electrons or gamma radiation interacting with the scintillator crystal 20, following a primary signal component which is due to the prompt emission.

In a next step of the method, the gamma-ray detector 10 generates an electrical signal in succession of an interaction between gamma rays or conversion electrons and said scintillator crystal 20. The electrical signal is in a known relationship with the energy deposited by the detected gamma rays or conversion electrons in said scintillator crystal 20.

Next, the digitizer samples the electrical signal of said gamma-ray detector with a predetermined frequency of at least 20 mega samples per second, preferably at least 100 mega samples per second, to generate digitized time series of the detected gamma rays, and transmits the digitized time series to the analyzer 50.

In a further step of the method according to the invention the analyzer 50 identifies a primary signal component in a digitized time series, denoted as Pulse 1 in Fig. 2, corresponding to an energy deposition *E*₀ in a predefined range. Further, the analyzer 50 searches for a first delayed signal component in the digitized time series, denoted as Pulse 2 in Fig. 2. The first delayed signal component corresponds to an energy deposition of about 30 keV and follows the primary signal with a time delay of at most 2µs. Further, the analyzer 50 searches for a second delayed signal component, denoted as Pulse 3 inFig. 2. The second delayed signal component corresponds to an energy deposition of about 138 keV and follows the first delayed signal component with a time delay of at most 10 µs.

It may be sufficient to simply count the number of digitizes time series in which a primary signal component, a first delayed signal component and a second delayed signal component are identified to determine a measure the neutron flux the scintillator crystal is exposed to. Preferably, however, to further suppress random background events, the analyzer 50 quantifies at least one of a group of event parameters for each of the digitized time series, and evaluates for each of said digitized time series whether at least one event parameter of the group of event parameters fulfills a predefined criteria to classify said digitized time series as neutron event. With counting the number of digitized time series classified as neutron event the analyzer 50 provides a measure for a thermal neutron flux the scintillator crystal 20 is exposed to.

As demonstrated by the examples shown in Fig. 2 the analyzer 50 preferably is adapted to find and to identify the delayed triple coincidences in the digitized time series by means of pulse pile-up reconstruction techniques. For pulse pile-up reconstruction, the analyzer uses a method to decompose the digitized time series to their components. Thereby, the analyzer 50 quantifies at least one of the group of event parameters for each of the digitized time series.

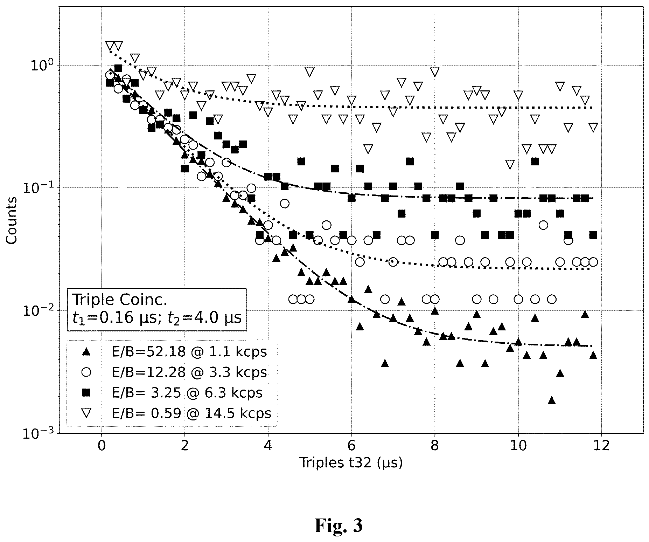

The event parameters quantified by the analyzer 50 of the delayed triple coincidences shown inFig. 2 comprise the time differences between the primary signal component (Pulse 1) and the first delayed signal component (Pulse 2), denoted by t21, and between the first delayed signal component (Pulse 2) and the second delayed signal component (Pulse 3), denoted by t32. The latter time difference, t32, will be discussed further with respect to Fig. 3.

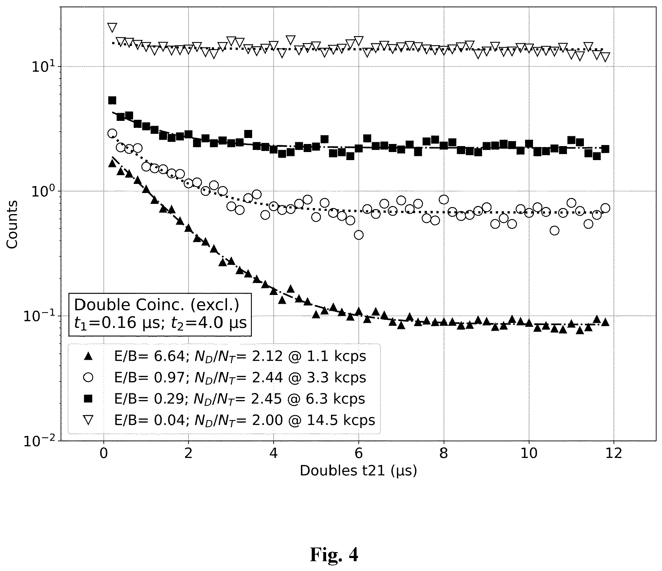

The analyzer 50 is preferably adapted to compute a measure for the neutron flux, particularly the slow neutron flux, the detector 10 is exposed to, from the event parameters, as explained with respect to Fig. 3 and Fig. 4.

**Figure 3** shows distributions of time differences t32 between the second delayed signal component, corresponding to an energy deposition of around 138 keV in the scintillator crystal 20, and the first delayed signal component, corresponding to an energy deposition of around 30 keV in the scintillator crystal 20, of delayed triple coincidences as shown inFig. 2, measured at different detector loads as indicated in the figure.

The data was measured with the detector 10, as described with respect to Fig. 2, being exposed to a moderated ²⁵²Cf neutron source. The signal analysis was performed with the same algorithm as used for the analysis of signals shown inFig. 2. Additional detector load was generated by complementary Th ore and ¹³⁷Cs sources arranged at various distances from the scintillator crystal 20. The distributions of time differences measured at different detector loads are denoted by different symbols.

The t32 distributions were fitted with the fit function *f*(*t*) *= a* · *e*^{*-λ*·}*^{t} + b,* with *λ* = 0.693 / 0.845 *µs* representing the decay constant corresponding to a half-life of 845 ns, and then normalized with respect to the fit parameter *a*. The fits curves are also shown in the figure.

The fit parameter *a* measures the strength of the second delayed signal component (half-life of 845 ns) in the t32 distribution characterizing the second delayed transition, and thus the number of neutrons detected in a corresponding measurement. This means that all distributions shown in Fig. 3 are normalized to the same number of neutrons. The fit parameter *b* measures the background of random delayed triple coincidences which are not due to neutron captures in ¹²⁷I. Also given in Fig. 3 are effect-to-background ratios *E*/*B* which are derived from the fit parameters. The effect-to-background ratios are computed from the number of neutrons ${N}_{n} = {\int }_{t 1}^{t 2} a ⋅ {e}^{- λ ⋅ t} dt = \frac{a}{λ} \left[{e}^{- λ ⋅ {t}_{1}}-{e}^{- λ ⋅ {t}_{2}}\right]$ divided by the background contribution in the same time interval ${N}_{bck} = {\int }_{t 1}^{t 2} b dt = b ⋅ \left({t}_{2}-{t}_{1}\right)$ for an integration time ranging from *t*₁ = 0.16 *µ*s, which is the minimum detectable time difference between piled-up signal components with the pulse pile-up reconstruction algorithm used for analyzing the data, to *t*₂ = 4.0 *µ*s, which is a reasonable limit covering most neutron signals but not too much background. Note that the choice of the integration time range affects the *E*/*B* ratio. While *t*₁ should always be set to the minimum detectable pulse delay to maximize the number of neutron counts considered, the optimum *t*₂ value is affected by the background contribution, which varies with the actual detector load. The *E*/*B* ratios given here thus represent no general result, but exemplary values illustrating the trend: Time distributions as well as the corresponding *E*/*B* ratios reflect the rising background contribution towards higher detector load. However, the neutron contribution, distinguished by an exponential decay with a decay constant corresponding to 845 ns half-life, is still visible and can be quantified even at a detector load around 15 kcps in terms of the fit parameter *a*.

Preferably, the analyzer 50 computes a measure for the thermal neutron flux the scintillator crystal 20 is exposed to by determining a distribution of time differences t32 between the second delayed signal component and the first delayed signal component, fitting said distribution using a function comprising an exponential decay component corresponding to the half-life of the second delayed signal component and a scaling factor, wherein the scaling factor represents the number of (thermal) neutrons detected. Similarly, the number of neutrons may be obtained from the distribution of time differences between the first delayed signal component and the primary signal component, and even from the distribution between the second delayed signal component and the primary signal component, as long as the functions are adapted to comprise the corresponding exponential decay components.

Also preferably, the analyzer 50 computes another event parameter, the time difference t21 between the first delayed signal component and the primary signal. By selecting only such delayed triple-coincidence events as potential neutron counts being considered for further analysis, e.g. for accumulating the t32 distribution, where t21 does not exceed a predefined limit, preferably 2 µs, more preferably 1.5 µs, the effect-to-background ratio is increased at the expense of the effect count rate.

Also preferably, the analyzer 50 computes another event parameter, the energy deposition in the scintillator crystal 20 corresponding to the primary signal, *E*₀. By selecting only such delayed triple-coincidence events as potential neutron counts being considered for further analysis, e.g. for accumulating the t32 distribution, where E_0 corresponds, within the energy resolution of the gamma detector, to the energy of a strong transition leading to the 167.3 keV state in ¹²⁸I, preferably 142 keV or 67 keV, or to the sum energy of such transitions, the effect-to-background ratio is increased at the expense of the effect count rate.

Similarly preferably, the analyzer 50 computes other event parameters, the energy depositions in the scintillator crystal 20 corresponding to the first and/or the second delayed signal components, *E*₁ and/or *E*₂, respectively. By selecting only such delayed triple-coincidence events as potential neutron counts being considered for further analysis, e.g. for accumulating the t32 distribution, where *E*₁ corresponds, within the energy resolution of the gamma detector, to the 30 keV transition feeding the 137.8 keV state in ¹²⁸I, and/or *E*₂ corresponds, within the energy resolution of the gamma detector, to the 138 keV energy released during de-excitation of the 137.8 keV state in ¹²⁸I, the effect-to-background ratio is increased at the expense of the effect count rate.

In general, said predefined criteria applied to one or more event parameters, eventually combined to a set of criteria, can be used to further increase the effect-to-background ration on the expense of the effect (i.e., neutron) count rate. This allows dynamically adapting the sensitivity of the radiation detection system 1 with respect to neutron detection to the ambient gamma-ray background by using sets of more or less restrictive criteria, depending on said ambient background. In case of low ambient gamma background, weak or even no criteria applied to the event parameters maximize the neutron count rate at still acceptable background in the neutron counts. In case of a strong ambient gamma background, leading to an increased number of random delayed triple coincidences, more restrictive event selection criteria reduce the neutron sensitivity but may still allow quantifying the neutron flux the scintillator crystal 20 is exposed to.

**Figure 4** shows distributions of time differences t21 between a delayed signal component and the primary signal component of delayed double coincidences comprised in the same data sets as referenced above with respect toFig. 2and 3.

The event parameter t21, representing the time difference (delay) between the delayed signal component corresponding to an energy deposition of around 138 keV in the scintillator crystal 20 and the primary signal component, was quantified by the analyzer 50. The time distributions shown in Fig. 4 exclusively comprise delayed double coincidence events according to which a delayed signal component corresponding to an energy depositions of about 138 keV but no preceding delayed signal component corresponding to an energy deposition of about 30 keV was detected. Fig. 4 thus exhibits data that may be used for neutron detection in addition to the delayed triple coincidence events discussed with respect to Fig. 2 and 3.

The t21 distributions were fitted with the function *f*(*t*) *= a · e*^{*-λ*·}*^{t} + b,* with *λ* = 0.693 / 0.845 *µ*s, but (for better precision) normalized with the neutron contributions obtained from the delayed triple coincidence data shown in Fig. 3. The effect-to-background ratios *E*/*B* were determined from fits applying the formulae and integration time ranges as used for Fig. 3 to the t21 distributions shown in Fig. 4. The numbers *N_{D}*/*N_{T}* given in Fig. 4 denote the ratios of neutron counts derived from the t21 distribution of delayed double coincidences (*N_{D}*) as given in the Fig. 4 to the neutron counts derived from the t32 distribution of delayed triple coincidences (*N_{T}*) in the same measurement as referenced above with respect to Fig. 3. These numbers quantify, in other words, the ratio of the effect count rates exploiting delayed double coincidences only, or delayed triple coincidences only, wherein the effect count rates were both obtained from the same data set and using the same pulse pile-up reconstruction algorithm.

It is obvious that the delayed triple coincidences provide a much better - in these exemplary cases by about an order of magnitude better - effect-to-background ratio for neutron counting than the delayed double coincidences, while the neutron contribution measured with delayed double coincidences is only about twice the neutron contribution measured with delayed triple coincidences. Nevertheless the neutron contribution measured with delayed double coincidences provides an additional and valuable measure for the neutron flux the scintillator crystal 20 is exposed to.

In a preferred embodiment of the invention the analyzer 50 measures the neutron flux the scintillator crystal 20 is exposed to from the neutron contribution derived from delayed double coincidences and from the neutron contribution derived from delayed triple coincidences, both contributions obtained from a pile-up re-construction algorithm that allows decomposing piled-up pulses and a subsequent event parameter analysis, thus increasing the accuracy of the neutron flux measurement.

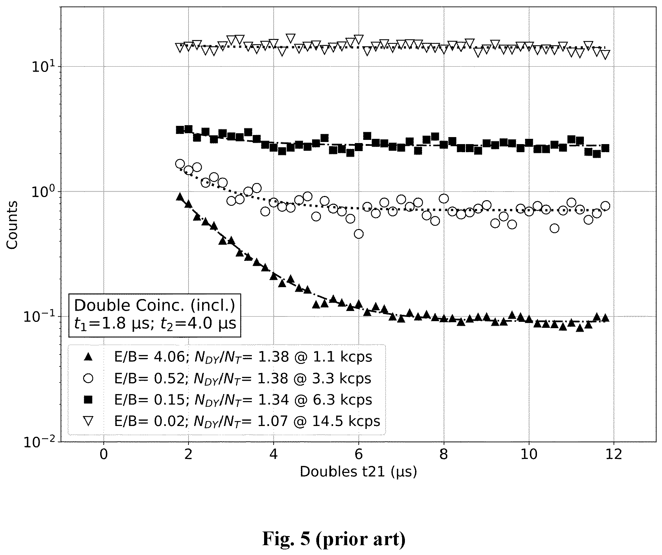

**Figure 5** shows distributions of time differences t21 between a delayed signal component corresponding to an energy deposition of 138 keV and the primary signal component of delayed double coincidences, measured at different detector loads with a simulated trigger holdoff of 1.8 µs, the analysis also including delayed triple coincidences, however, without being detected as such, as the first delayed signal component is hidden due to the trigger holdoff. thereby simulating prior art. All detected delayed coincidences are comprised in the same data as references above with respect to Fig. 2 to 4.

In contrast to Fig. 4, the time distributions of Fig. 5 comprise all events exhibiting a delayed 138 keV signal, even if a preceding 30 keV signal was originally detected by the pulse pile-up reconstruction algorithm but ignored because of the simulated trigger holdoff. Also in contrast to Figures 3-4, the integration time range here starts at *t*₁ = 1.8 *µ*, which corresponds to the trigger holdoff applied in Yakushev's measurement. The data shown in Fig. 5 thus represent t21 distributions and effect-to-background ratios *E*/*B* that would be measured under equivalent conditions with a setup according to prior art as described by Yakushev et al. The numbers *N_{DY}*/*N_{T}* denote the ratios of the neutron counts, achievable with a delayed double-coincidence analysis according to prior art, to the neutron counts obtained by delayed triple-coincidence analysis with the method according to the invention under equivalent conditions as shown in Fig. 3.

The analysis of delayed triple coincidence events according to the invention obviously provides a much better, by more than an order of magnitude better, effect-to-background ratio than prior art, while the effect rates are rather comparable. Moreover, if delayed double-coincidence are not excluded but also considered separately as shown in Fig. 4, the effect rate with the method according to the present invention is about twice that of the rate achievable with prior art, while the effective effect-to-background ratio is much higher.

Hence, Fig. 3 and Fig. 5 demonstrate clearly the advantage of the method and radiation detection system according to the present invention based on delayed triple coincidences compared with the method described by Yakushev et al. based on delayed double coincidences by a direct comparison of effect-to-background ratios and effect rates using exemplary, consistent experimental data obtained under realistic conditions.

### Reference numerals:

- 1: Radiation detection system
- 10: Gamma-ray detector
- 20: Scintillator crystal
- 30: Photodetector with an amplifier
- 40: Digitizer
- 50: Analyzer

- *E*/*B*: Effect-to-background ratio

- *N_{D}*: Number of detectible neutron counts based on delayed double coincidences
- *N_{T}*: Number of detectible neutron counts based on delayed triple coincidences
- *N_{DY}*: Number of detectible neutron counts using prior art

- t1: Detection time of primary signal component
- t2: Detection time of first delayed signal component
- t3: Detection time of second delayed signal component

- t21: Time difference between a delayed signal component (138 keV) and the primary signal component
- t32: Time difference between the second delayed signal component (138 keV) and the first delayed signal component (30 keV)

## Claims

1. Radiation detection system (1) for a parallel detection of gamma rays and neutrons, comprising:
• a gamma-ray detector (10) comprising a scintillator crystal (20) comprising ¹²⁷I and a photodetector (30) with an amplifier, wherein said scintillator crystal is adapted to convert energy deposited by gamma rays or conversion electrons to optical photons, the photodetector is adapted to convert the optical photons to an electrical signal and the amplifier is adapted to amplify the electrical signal, wherein the electrical signal is in a known relationship with the energy deposited by the detected gamma rays or conversion electrons in said scintillator crystal,
• a digitizer (40) comprising sampling Analog to Digital Converters, ADC, wherein said digitizer is adapted to sample the electrical signal of said gamma-ray detector with a predetermined frequency of at least 20 mega samples per second to generate digitized time series of the electrical signal, and
• an analyzer (50) which is coupled operatively to said digitizer, wherein said digitizer is adapted to transmit the digitized time series to the analyzer, and wherein the analyzer is adapted to analyze the digitized time series in order to identify signal components in the digitized time series with consecutive time delays between each other of at least 20 ns and at most 10 µs, wherein each signal component is due to an energy deposition in the scintillator,
wherein the analyzer is further adapted to:
• identify a primary signal component in the digitized time series corresponding to an energy deposition *E*₀ in a predefined range,
• identify a first delayed signal component in the digitized time series, the first delayed signal component corresponding to an energy deposition *E*₁ of about 30 keV, preferably between 15 keV and 50 keV, and following the primary signal component in time,
• identify a second delayed signal component in the digitized time series, the second delayed signal component corresponding to an energy deposition *E*₂ of about 138 keV, preferably between 100 keV and 200 keV, and following the first delayed signal component in time, and
• count the number of digitized time series comprising at least the first delayed signal component and the second delayed signal component as neutron events, thereby providing a measure for a neutron flux the scintillator crystal is exposed to.

2. The radiation detection system of claim 1, wherein the analyzer is further adapted to:
• quantify at least one event parameter of a group of event parameters for each of said digitized time series, the group of event parameters comprising:
o the time difference between said primary signal component and said first delayed signal component,
o the time difference between said primary component and said second delayed signal component,
o the time difference between said first delayed signal component and said second delayed signal component,
o the energy deposition in the scintillator crystal correspond-ing to the primary signal component,
o the energy deposition in the scintillator crystal correspond-ing to the first delayed signal component,
o the energy deposition in the scintillator crystal correspond-ing to the second delayed signal component, and
o combinations thereof,
• evaluate for each of said digitized time series whether at least one event parameter of the group of event parameters fulfills a predefined criteria to classify said digitized time series as neutron event, and
• count the number of digitized time series classified as neutron event, thereby providing a measure for the neutron flux the scintillator crystal is exposed to.

3. Radiation detection system according to claim 1, wherein the photodetector of the gamma-ray detector is a photomultiplier tube, a silicon photomultiplier, SiPM, or an avalanche photodiode.

4. Radiation detection system according to claim 2, wherein the photomultiplier tube comprises a super-bialkali photokathode or an ultra-bialkali photokathode.

5. Radiation detection system according to any of the proceeding claims, wherein said scintillator crystal is a NaI crystal, preferably with Tl doping, or a CsI crystal, preferably with Na or Tl doping, or a NaI crystal, preferably with Tl doping, comprising Li or B as co-dopant.

6. Radiation detection system according to any of the proceeding claims, wherein the gamma-ray detector, the digitizer and the analyzer are small enough to be arranged in a handheld device.

7. Radiation detection system according to any of the proceeding claims, wherein the gamma-ray detector, the digitizer and the analyzer are small enough to be arranged in a backpack.

8. A method to detect neutrons and gamma rays, utilizing the radiation detection system according to any of the claims 1 to 7, the method comprising the following steps:
• neutrons interacting with ¹²⁷I of the scintillator crystal generating ¹²⁸I upon neutron capture, wherein ¹²⁸I de-excites both under a prompt emission of gamma radiation and at least partially via at least one long-lived excited state feeding another long-lived excited state, which at least sometimes leads to two delayed energy depositions in the scintillator crystal corresponding to the two delayed de-excitation steps producing either conversion electrons or gamma radiation interacting with the scintillator crystal, following a primary signal component which is due to the prompt emission,
• said gamma-ray detector generating an electrical signal in succession of an interaction between gamma rays or conversion electrons and said scintillator crystal, wherein said electrical signal is in a known relationship with the energy deposited by the detected gamma rays or conversion electrons in said scintillator crystal,
• said digitizer sampling the electrical signal of said gamma-ray detector with a predetermined frequency of at least 20 mega samples per second to generate a digitized time series of the detected gamma rays, and transmitting the digitized time series to the analyzer,
• said analyzer identifying a primary signal component in the digitized time series corresponding to an energy deposition *E*₀ in a predefined range,
• said analyzer searching for a first delayed signal component in the digitized time series, the first delayed signal component corresponding to an energy deposition of about 30 keV, preferably between 15 kV and 50 keV, and following the primary signal in time,
• said analyzer searching for a second delayed signal component, the second delayed signal component corresponding to an energy deposition of about 138 keV, preferably between 100 keV and 200 keV, and following the first delayed signal component in time,
• said analyzer counting the number of digitized time series comprising at least the first delayed signal component and the second delayed signal component as neutron events, thereby providing a measure for the neutron flux the scintillator crystal is exposed to.

9. The method of claim 8, further comprising the steps:
• said analyzer quantifying at least one event parameter of a group of event parameters for each of said digitized time series, the group of event parameters comprising:
o the time difference between said primary signal component and said first delayed signal component,
o the time difference between said primary component and said second delayed signal component,
o the time difference between said first delayed signal component and said second delayed signal component,
o the energy deposition in the scintillator crystal correspond-ing to the primary signal component,
o the energy deposition in the scintillator crystal correspond-ing to the first delayed signal component,
o the energy deposition in the scintillator crystal correspond-ing to the second delayed signal component, and
o combinations thereof,
• said analyzer evaluating for each of said digitized time series whether at least one event parameter of the group of event parameters fulfills a predefined criteria to classify said digitized time series as neutron event, and
• said analyzer counting the number of digitized time series classified as neutron event, thereby providing a measure for the neutron flux the scintillator crystal is exposed to.

10. The method of claim 9, wherein said analyzer finds and identifies at least one delayed signal component in said digitized time series by means of pulse pile-up reconstruction techniques, utilizing a method to decompose the digitized time series comprising piled-up signal components into these components, thereby quantifying at least one of the group of event parameters.

11. The method according to any of the claims 8 to 10, wherein said analyzer further:
• identifies another primary signal component in the digitized time series corresponding to an energy deposition in a predefined range,
• searches for a delayed signal component in the digitized time series, the delayed signal component corresponding to an energy deposition of around 138 keV, preferably between 100 keV and 200 keV, and following said primary signal component in time,
• quantifies at least one event parameter of the group of event parameters for each of said digitized time series, the group further comprising:
∘ the time difference between said primary component and said delayed signal component,
o the energy deposition in the scintillator crystal correspond-ing to said primary signal component, and
o the energy deposition in the scintillator crystal correspond-ing to said delayed signal component,
• said analyzer evaluating for each of said digitized time series whether at least one event parameter of the group of event parameters fulfills a predefined criteria to classify said digitized time series as thermal neutron event, and
• said analyzer counting the number of digitized time series classified as neutron event, thereby providing a measure for the neutron flux the scintillator crystal is exposed to.

## Patentansprüche

1. Ein Strahlungsdetektionssystem (1) für eine parallele Detektion von Gammastrahlen und Neutronen, beinhaltend:
• einen Gammastrahlendetektor (10), der einen ¹²⁷I beinhaltenden Szintillatorkristall (20) und einen Photodetektor (30) mit einem Verstärker beinhaltet, wobei der Szintillatorkristall angepasst ist, um Energie, die durch Gammastrahlen oder Umwandlungselektronen deponiert wird, in optische Photonen umzuwandeln, wobei der Photodetektor angepasst ist, um die optischen Photonen in ein elektrisches Signal umzuwandeln, und der Verstärker angepasst ist, um das elektrische Signal zu verstärken, wobei das elektrische Signal in einer bekannten Beziehung zu der Energie steht, die durch die detektierten Gammastrahlen oder Umwandlungselektronen in dem Szintillatorkristall deponiert wird,
• einen Digitalisierer (40), der Abtast-Analog-Digital-Wandler, ADC, beinhaltet, wobei der Digitalisierer angepasst ist, um das elektrische Signal des Gammastrahlendetektors mit einer vorgegeben Frequenz von mindestens 20 Millionen Abtastungen pro Sekunde abzutasten, um digitalisierte Zeitreihen des elektrischen Signals zu erzeugen, und
• einen Analysator (50), der operativ mit dem Digitalisierer gekoppelt ist, wobei der Digitalisierer angepasst ist, um die digitalisierten Zeitreihen an den Analysator zu übertragen, und wobei der Analysator angepasst ist, um die digitalisierten Zeitreihen zu analysieren, um Signalkomponenten in den digitalisierten Zeitreihen mit aufeinanderfolgenden Zeitverzögerungen zwischeneinander von mindestens 20 ns und höchstens 10 µs zu identifizieren, wobei jede Signalkomponente auf eine Energiedeponierung in dem Szintillator zurückzuführen ist,
wobei der Analysator ferner für Folgendes angepasst ist:
• Identifizieren einer primären Signalkomponente in den digitalisierten Zeitreihen, die einer Energiedeponierung *E*₀ in einem vordefinierten Bereich entspricht,
• Identifizieren einer ersten verzögerten Signalkomponente in den digitalisierten Zeitreihen, wobei die erste verzögerte Signalkomponente einer Energiedeponierung *E*₁ von etwa 30 keV, vorzugsweise zwischen 15 keV und 50 keV, entspricht und zeitlich der primären Signalkomponente folgt,
• Identifizieren einer zweiten verzögerten Signalkomponente in den digitalisierten Zeitreihen, wobei die zweite verzögerte Signalkomponente einer Energiedeponierung *E*₂ von etwa 138 keV, vorzugsweise zwischen 100 keV und 200 keV, entspricht und zeitlich der ersten verzögerten Signalkomponente folgt, und
• Zählen der Anzahl von digitalisierten Zeitreihen, die mindestens die erste verzögerte Signalkomponente und die zweite verzögerte Signalkomponente beinhalten, als Neutronenereignisse, wodurch ein Maß für einen Neutronenfluss, dem der Szintillatorkristall ausgesetzt ist, bereitgestellt wird.

2. Strahlungsdetektionssystem gemäß Anspruch 1, wobei der Analysator ferner für Folgendes angepasst ist:
• Quantifizieren mindestens eines Ereignisparameters einer Gruppe von Ereignisparametern für jede der digitalisierten Zeitreihen, wobei die Gruppe von Ereignisparametern Folgendes beinhaltet:
o die Zeitdifferenz zwischen der primären Signalkomponente und der ersten verzögerten Signalkomponente,
o die Zeitdifferenz zwischen der primären Komponente und der zweiten verzögerten Signalkomponente,
o die Zeitdifferenz zwischen der ersten verzögerten Signalkomponente und der zweiten verzögerten Signalkomponente,
o die Energiedeponierung in dem Szintillatorkristall, die der primären Signalkomponente entspricht,
o die Energiedeponierung in dem Szintillatorkristall, die der ersten verzögerten Signalkomponente entspricht,
o die Energiedeponierung in dem Szintillatorkristall, die der zweiten verzögerten Signalkomponente entspricht, und
o Kombinationen davon,
• Bewerten für jede der digitalisierten Zeitreihen, ob mindestens ein Ereignisparameter der Gruppe von Ereignisparametern ein vordefiniertes Kriterium erfüllt, um die digitalisierten Zeitreihen als Neutronenereignis zu klassifizieren, und
• Zählen der Anzahl von digitalisierten Zeitreihen, die als Neutronenereignis klassifiziert werden, wodurch ein Maß für den Neutronenfluss, dem der Szintillatorkristall ausgesetzt ist, bereitgestellt wird.

3. Strahlungsdetektionssystem gemäß Anspruch 1, wobei der Photodetektor des Gammastrahlendetektors eine Photovervielfacherröhre, ein Siliziumphotovervielfacher, SiPM, oder eine Lawinenphotodiode ist.

4. Strahlungsdetektionssystem gemäß Anspruch 2, wobei die Photovervielfacherröhre eine Super-Bialkali-Photokathode oder eine Ultra-Bialkali-Photokathode beinhaltet.

5. Strahlungsdetektionssystem gemäß einem der vorhergehenden Ansprüche, wobei der Szintillatorkristall ein Nal-Kristall, vorzugsweise mit TI-Dotierung, oder ein Csl-Kristall, vorzugsweise mit Na- oder TI-Dotierung, oder ein Nal-Kristall, vorzugsweise mit TI-Dotierung, der Li oder B als Co-Dotierstoff beinhaltet, ist.

6. Strahlungsdetektionssystem gemäß einem der vorhergehenden Ansprüche, wobei der Gammastrahlendetektor, der Digitalisierer und der Analysator klein genug sind, um in einer handgehaltenen Vorrichtung angeordnet zu werden.

7. Strahlungsdetektionssystem gemäß einem der vorhergehenden Ansprüche, wobei der Gammastrahlendetektor, der Digitalisierer und der Analysator klein genug sind, um in einem Rucksack angeordnet zu werden.

8. Ein Verfahren zum Detektieren von Neutronen und Gammastrahlen unter Nutzung des Strahlungsdetektionssystems gemäß einem der Ansprüche 1 bis 7, wobei das Verfahren die folgenden Schritte beinhaltet:
• durch mit ¹²⁷I des Szintillatorkristalls interagierende Neutronen Erzeugen von ¹²⁸I bei Neutroneneinfang, wobei sich ¹²⁸I sowohl unter einer prompten Emission von Gammastrahlung als auch zumindest teilweise über zumindest einen langlebigen angeregten Zustand, der einen anderen langlebigen angeregten Zustand speist, abregt, was zumindest manchmal, einer primären Signalkomponente folgend, die auf die prompte Emission zurückzuführen ist, zu zwei verzögerten Energiedeponierungen in dem Szintillatorkristall führt, die den zwei verzögerten Abregungsschritten entsprechen, die entweder Konversionselektronen oder Gammastrahlung produzieren, die mit dem Szintillatorkristall interagieren,
• Erzeugen, durch den Gammastrahlendetektor, eines elektrischen Signals im Anschluss an eine Interaktion zwischen Gammastrahlen oder Umwandlungselektronen und dem Szintillatorkristall, wobei das elektrische Signal in einer bekannten Beziehung zu der Energie steht, die durch die detektierten Gammastrahlen oder Umwandlungselektronen in dem Szintillatorkristall deponiert wird,
• Abtasten, durch den Digitalisierer, des elektrischen Signals des Gammastrahlendetektors mit einer vorgegeben Frequenz von mindestens 20 Millionen Abtastungen pro Sekunde, um eine digitalisierte Zeitreihe der detektierten Gammastrahlen zu erzeugen, und Übertragen der digitalisierten Zeitreihe an den Analysator,
• Identifizieren, durch den Analysator, einer primären Signalkomponente in der digitalisierte Zeitreihe, die einer Energiedeponierung *E*₀ in einem vordefinierten Bereich entspricht,
• Suchen, durch den Analysator, nach einer ersten verzögerten Signalkomponente in der digitalisierten Zeitreihe, wobei die erste verzögerte Signalkomponente einer Energiedeponierung von etwa 30 keV, vorzugsweise zwischen 15 keV und 50 keV, entspricht und zeitlich dem primären Signal folgt,
• Suchen, durch den Analysator, nach einer zweiten verzögerten Signalkomponente, wobei die zweite verzögerte Signalkomponente einer Energiedeponierung von etwa 138 keV, vorzugsweise zwischen 100 keV und 200 keV, entspricht und zeitlich der ersten verzögerten Signalkomponente folgt,
• Zählen, durch den Analysator, der Anzahl von digitalisierten Zeitreihen, die mindestens die erste verzögerte Signalkomponente und die zweite verzögerte Signalkomponente beinhalten, als Neutronenereignisse, wodurch ein Maß für den Neutronenfluss, dem der Szintillatorkristall ausgesetzt ist, bereitgestellt wird.

9. Verfahren gemäß Anspruch 8, das ferner die folgenden Schritte beinhaltet:
• Quantifizieren, durch den Analysator, mindestens eines Ereignisparameters einer Gruppe von Ereignisparametern für jede der digitalisierten Zeitreihen, wobei die Gruppe von Ereignisparametern Folgendes beinhaltet:
o die Zeitdifferenz zwischen der primären Signalkomponente und der ersten verzögerten Signalkomponente,
o die Zeitdifferenz zwischen der primären Komponente und der zweiten verzögerten Signalkomponente,
o die Zeitdifferenz zwischen der ersten verzögerten Signalkomponente und der zweiten verzögerten Signalkomponente,
o die Energiedeponierung in dem Szintillatorkristall, die der primären Signalkomponente entspricht,
o die Energiedeponierung in dem Szintillatorkristall, die der ersten verzögerten Signalkomponente entspricht,
o die Energiedeponierung in dem Szintillatorkristall, die der zweiten verzögerten Signalkomponente entspricht, und
o Kombinationen davon,
• Bewerten, durch den Analysator, für jede der digitalisierten Zeitreihen, ob mindestens ein Ereignisparameter der Gruppe von Ereignisparametern ein vordefiniertes Kriterium erfüllt, um die digitalisierte Zeitreihe als Neutronenereignis zu klassifizieren, und
• Zählen, durch den Analysator, der Anzahl von digitalisierten Zeitreihen, die als Neutronenereignis klassifiziert werden, wodurch ein Maß für den Neutronenfluss, dem der Szintillatorkristall ausgesetzt ist, bereitgestellt wird.

10. Verfahren gemäß Anspruch 9, wobei der Analysator mittels Impulsüberlappungsrekonstruktionstechniken mindestens eine verzögerte Signalkomponente in den digitalisierten Zeitreihen findet und identifiziert, wobei ein Verfahren genutzt wird, um die digitalisierten Zeitreihen, die überlappte Signalkomponenten beinhalten, in diese Komponenten zu zerlegen, wodurch mindestens einer der Gruppe von Ereignisparametern quantifiziert wird.

11. Verfahren gemäß einem der Ansprüche 8 bis 10, wobei der Analysator ferner:
• eine andere primäre Signalkomponente in den digitalisierten Zeitreihen identifiziert, die einer Energiedeponierung in einem vordefinierten Bereich entspricht,
• nach einer verzögerten Signalkomponente in den digitalisierten Zeitreihen sucht, wobei die verzögerte Signalkomponente einer Energiedeponierung von etwa 138 keV, vorzugsweise zwischen 100 keV und 200 keV, entspricht und zeitlich der primären Signalkomponente folgt,
• mindestens einen Ereignisparameter der Gruppe von Ereignisparametern für jede der digitalisierten Zeitreihen quantifiziert, wobei die Gruppe ferner Folgendes beinhaltet:
o die Zeitdifferenz zwischen der primären Komponente und der verzögerten Signalkomponente,
o die Energiedeponierung in dem Szintillatorkristall, die der primären Signalkomponente entspricht, und
o die Energiedeponierung in dem Szintillatorkristall, die der verzögerten Signalkomponente entspricht,
• wobei der Analysator für jede der digitalisierten Zeitreihen bewertet, ob mindestens ein Ereignisparameter der Gruppe von Ereignisparametern ein vordefiniertes Kriterium erfüllt, um die digitalisierte Zeitreihe als thermisches Neutronenereignis zu klassifizieren, und
• der Analysator die Anzahl von digitalisierten Zeitreihen, die als Neutronenereignis klassifiziert werden, zählt, wodurch ein Maß für den Neutronenfluss, dem der Szintillatorkristall ausgesetzt ist, bereitgestellt wird.

## Revendications

1. Système de détection de rayonnement (1) pour une détection parallèle de rayons gamma et de neutrons, comprenant :
• un détecteur de rayons gamma (10) comprenant un cristal scintillateur (20) comprenant du ¹²⁷I et un photodétecteur (30) avec un amplificateur, où ledit cristal scintillateur est conçu pour convertir de l'énergie déposée par des rayons gamma ou des électrons de conversion en photons optiques, le photodétecteur est conçu pour convertir les photons optiques en un signal électrique et l'amplificateur est conçu pour amplifier le signal électrique, où le signal électrique est dans une relation connue avec l'énergie déposée par les rayons gamma ou les électrons de conversion détectés dans ledit cristal scintillateur,
• un numériseur (40) comprenant des convertisseurs analogique-numérique, ADC, d'échantillonnage, où ledit numériseur est conçu pour échantillonner le signal électrique dudit détecteur de rayons gamma avec une fréquence prédéterminée d'au moins 20 méga-échantillons par seconde pour générer des séries temporelles numérisées du signal électrique, et
• un analyseur (50) qui est couplé fonctionnellement audit numériseur, où ledit numériseur est conçu pour transmettre les séries temporelles numérisées à l'analyseur, et où l'analyseur est conçu pour analyser les séries temporelles numérisées afin d'identifier des composantes de signal dans les séries temporelles numérisées avec des retards temporels consécutifs entre elles d'au moins 20 ns et d'au plus 10 µs, où chaque composante de signal est due à un dépôt d'énergie dans le scintillateur,
où l'analyseur est en outre conçu pour :
• identifier une composante de signal primaire dans les séries temporelles numérisées correspondant à un dépôt d'énergie *E*₀ dans une plage prédéfinie,
• identifier une première composante de signal retardée dans les séries temporelles numérisées, la première composante de signal retardée correspondant à un dépôt d'énergie *E*₁ d'environ 30 keV, de préférence entre 15 keV et 50 keV, et suivant la composante de signal primaire dans le temps,
• identifier une deuxième composante de signal retardée dans les séries temporelles numérisées, la deuxième composante de signal retardée correspondant à un dépôt d'énergie *E*₂ d'environ 138 keV, de préférence entre 100 keV et 200 keV, et suivant la première composante de signal retardée dans le temps, et
• compter le nombre de séries temporelles numérisées comprenant au moins la première composante de signal retardée et la deuxième composante de signal retardée en tant qu'événements neutrons, fournissant de ce fait une mesure pour un flux de neutrons auquel le cristal scintillateur est exposé.

2. Le système de détection de rayonnement de la revendication 1, où l'analyseur est en outre conçu pour :
• quantifier au moins un paramètre d'événement d'un groupe de paramètres d'événement pour chacune desdites séries temporelles numérisées, le groupe de paramètres d'événement comprenant :
∘ la différence de temps entre ladite composante de signal primaire et ladite première composante de signal retardée,
∘ la différence de temps entre ladite composante primaire et ladite deuxième composante de signal retardée,
∘ la différence de temps entre ladite première composante de signal retardée et ladite deuxième composante de signal retardée,
∘ le dépôt d'énergie dans le cristal scintillateur correspondant à la composante de signal primaire,
∘ le dépôt d'énergie dans le cristal scintillateur correspondant à la première composante de signal retardée,
∘ le dépôt d'énergie dans le cristal scintillateur correspondant à la deuxième composante de signal retardée, et
∘ des combinaisons de ceux-ci,
• évaluer pour chacune desdites séries temporelles numérisées si au moins un paramètre d'événement du groupe de paramètres d'événement remplit un critère prédéfini pour classer ladite série temporelle numérisée en tant qu'événement neutron, et
• compter le nombre de séries temporelles numérisées classées en tant qu'événement neutron, fournissant de ce fait une mesure pour le flux de neutrons auquel le cristal scintillateur est exposé.

3. Système de détection de rayonnement selon la revendication 1, où le photodétecteur du détecteur de rayons gamma est un tube photomultiplicateur, un photomultiplicateur au silicium, SiPM (*Silicon PhotoMultiplier*), ou une photodiode à avalanche.

4. Système de détection de rayonnement selon la revendication 2, où le tube photomultiplicateur comprend une photocathode super-bi-alcaline ou une photocathode ultra-bi-alcaline.

5. Système de détection de rayonnement selon n'importe lesquelles des revendications précédentes, où ledit cristal scintillateur est un cristal Nal, de préférence avec dopage TI, ou un cristal Csl, de préférence avec dopage Na ou TI, ou un cristal Nal, de préférence avec dopage TI, comprenant Li ou B en tant que co-dopant.

6. Système de détection de rayonnement selon n'importe lesquelles des revendications précédentes, où le détecteur de rayons gamma, le numériseur et l'analyseur sont suffisamment petits pour être agencés dans un dispositif portatif.

7. Système de détection de rayonnement selon n'importe lesquelles des revendications précédentes, où le détecteur de rayons gamma, le numériseur et l'analyseur sont suffisamment petits pour être agencés dans un sac à dos.

8. Un procédé pour détecter des neutrons et des rayons gamma, employant le système de détection de rayonnement selon n'importe lesquelles des revendications 1 à 7, le procédé comprenant les étapes suivantes :
• l'interaction de neutrons avec le ¹²⁷I du cristal scintillateur générant du ¹²⁸I dès la capture de neutrons, où le ¹²⁸I se désexcite à la fois sous une émission prompte de rayonnement gamma et au moins partiellement via au moins un état excité à longue durée de vie alimentant un autre état excité à longue durée de vie, ce qui conduit au moins parfois à deux dépôts d'énergie retardés dans le cristal scintillateur correspondant aux deux étapes de désexcitation retardée produisant soit des électrons de conversion, soit un rayonnement gamma interagissant avec le cristal scintillateur, suivant une composante de signal primaire qui est due à l'émission prompte,
• la génération par ledit détecteur de rayons gamma d'un signal électrique à la suite d'une interaction entre des rayons gamma ou des électrons de conversion et ledit cristal scintillateur, où ledit signal électrique est dans une relation connue avec l'énergie déposée par les rayons gamma ou les électrons de conversion détectés dans ledit cristal scintillateur,
• l'échantillonnage par ledit numériseur du signal électrique dudit détecteur de rayons gamma avec une fréquence prédéterminée d'au moins 20 méga-échantillons par seconde pour générer une série temporelle numérisée des rayons gamma détectés, et la transmission de la série temporelle numérisée à l'analyseur,
• l'identification par ledit analyseur d'une composante de signal primaire dans la série temporelle numérisée correspondant à un dépôt d'énergie *E*₀ dans une plage prédéfinie,
• la recherche par ledit analyseur d'une première composante de signal retardée dans la série temporelle numérisée, la première composante de signal retardée correspondant à un dépôt d'énergie d'environ 30 keV, de préférence entre 15 keV et 50 keV, et suivant le signal primaire dans le temps,
• la recherche par ledit analyseur d'une deuxième composante de signal retardée, la deuxième composante de signal retardée correspondant à un dépôt d'énergie d'environ 138 keV, de préférence entre 100 keV et 200 keV, et suivant la première composante de signal retardée dans le temps,
• le comptage par ledit analyseur du nombre de séries temporelles numérisées comprenant au moins la première composante de signal retardée et la deuxième composante de signal retardée en tant qu'événements neutrons, fournissant de ce fait une mesure pour le flux de neutrons auquel le cristal scintillateur est exposé.

9. Le procédé de la revendication 8, comprenant en outre les étapes :
• de quantification par ledit analyseur d'au moins un paramètre d'événement d'un groupe de paramètres d'événement pour chacune desdites séries temporelles numérisées, le groupe de paramètres d'événement comprenant :
∘ la différence de temps entre ladite composante de signal primaire et ladite première composante de signal retardée,
∘ la différence de temps entre ladite composante primaire et ladite deuxième composante de signal retardée,
∘ la différence de temps entre ladite première composante de signal retardée et ladite deuxième composante de signal retardée,
∘ le dépôt d'énergie dans le cristal scintillateur correspondant à la composante de signal primaire,
∘ le dépôt d'énergie dans le cristal scintillateur correspondant à la première composante de signal retardée,
∘ le dépôt d'énergie dans le cristal scintillateur correspondant à la deuxième composante de signal retardée, et
∘ des combinaisons de ceux-ci,
• d'évaluation par ledit analyseur pour chacune desdites séries temporelles numérisées si au moins un paramètre d'événement du groupe de paramètres d'événement remplit un critère prédéfini pour classer ladite série temporelle numérisée en tant qu'événement neutron, et
• de comptage par ledit analyseur du nombre de séries temporelles numérisées classées en tant qu'événement neutron, fournissant de ce fait une mesure pour le flux de neutrons auquel le cristal scintillateur est exposé.

10. Le procédé de la revendication 9, où ledit analyseur trouve et identifie au moins une composante de signal retardée dans lesdites séries temporelles numérisées au moyen de techniques de reconstruction d'accumulation d'impulsions (*pulse pile-up*), employant un procédé pour décomposer les séries temporelles numérisées comprenant des composantes de signal accumulées en ces composantes, quantifiant de ce fait au moins un paramètre du groupe de paramètres d'événement.

11. Le procédé selon n'importe lesquelles des revendications 8 à 10, où ledit analyseur en outre :
• identifie une autre composante de signal primaire dans les séries temporelles numérisées correspondant à un dépôt d'énergie dans une plage prédéfinie,
• recherche une composante de signal retardée dans les séries temporelles numérisées, la composante de signal retardée correspondant à un dépôt d'énergie d'environ 138 keV, de préférence entre 100 keV et 200 keV, et suivant ladite composante de signal primaire dans le temps,
• quantifie au moins un paramètre d'événement du groupe de paramètres d'événement pour chacune desdites séries temporelles numérisées, le groupe comprenant en outre :
∘ la différence de temps entre ladite composante primaire et ladite composante de signal retardée,
∘ le dépôt d'énergie dans le cristal scintillateur correspondant à ladite composante de signal primaire, et
∘ le dépôt d'énergie dans le cristal scintillateur correspondant à ladite composante de signal retardée,
• ledit analyseur évaluant pour chacune desdites séries temporelles numérisées si au moins un paramètre d'événement du groupe de paramètres d'événement remplit un critère prédéfini pour classer ladite série temporelle numérisée en tant qu'événement neutron thermique, et
• ledit analyseur comptant le nombre de séries temporelles numérisées classées en tant qu'événement neutron, fournissant de ce fait une mesure pour le flux de neutrons auquel le cristal scintillateur est exposé.
